# EUROPEAN PATENT APPLICATION

(11) **EP 4 445 810 A1**
(43) Date of publication of application: **16.10.2024**
(21) Application number: 23170453.7
(22) Date of filing: 27.04.2023
(51) Int. Cl.: A47J 31/44

(54) **COFFEE TAMPER**

(30) Priority: 14.04.2023 KR 20230049221
(71) Applicant: CoffeeZ Inc., Seoul (KR)
(72) Inventor: Kim, Dong Wan, Seoul (KR); Kim, Hyun Gon, Gyeonggi-do (KR)
(74) Representative: Gulde & Partner

(57) **Abstract**

According to an embodiment of the present invention, a coffee tamper is provided. The coffee tamper may include: a compressing part having a compressing surface for compressing ground beans accommodated in a porter filter; a cylindrical main body part, which accommodates at least a portion of the compressing part and has a bottom part formed inside so as to support an upper side of the compressing surface; an operation part of which at least a portion is accommodated inside the main body part so as to move in a vertical direction with respect to the main body part; and a button part, which is disposed on an upper side of the operation part and receives compressing operation from a user so as to transmit an external force to the compressing part, wherein the operation part has a plurality of insertion protrusions for evenly mixing the ground beans and the compressing surface has a plurality of through holes corresponding to the plurality of insertion protrusions, and if at least a portion of the operation part is downwardly pressed in a first state in which the plurality of insertion protrusions are accommodated inside the main body part, the first state may be changed into a second state in which the plurality of insertion protrusions are exposed to outside of the main body part through the through holes.

## Description

### TECHNICAL FIELD

The present invention relates to a coffee tamper and, more specifically, to a coffee tamper capable of efficiently extracting coffee by performing both an operation of uniformly distributing ground beans accommodated in a porter filter and an operation of applying pressure to the ground beans.

### BACKGROUND ART

In general, a coffee tamper is a tool used when extracting espresso coffee and is inserted into a porter filter to tamp and compress coffee bean powder filled inside the porter filter. If the coffee bean powder is uniformly compressed through this tamping process, the extraction time can be maintained constant, and an extraction amount and pressure can be maintained in a balanced way, so that good quality espresso can be extracted.

Meanwhile, in the tamping process, pressure is applied to coffee bean powder filled in the porter filter. If the pressing force applied by a user is not uniform, a difference in tamping pressure occurs. For example, if excessive force is applied to a specific position, the coffee bean powder is biased to one side within the porter filter, and the density of the coffee bean powder at the specific position increases.

In addition, an air layer is formed between the coffee bean powder accommodated in the porter filter. If air between the coffee bean powder is not discharged during the tamping process, the density of the coffee bean powder becomes uneven, so that uniform taste and aroma of espresso cannot be extracted, deteriorating quality.

Therefore, various methods for extracting high-quality espresso with uniform taste and aroma have been researched.

### DISCLOSURE

### Technical Problem

An object of the present invention is to provide a coffee tamper for solving the above problems.

The technical problems of the present invention are not limited to the technical problems mentioned above, and other technical problems not mentioned will be clearly understood by those skilled in the art from the description below.

### Technical Solution

According to an embodiment of the present invention, a coffee tamper is provided. The coffee tamper may include: a compressing part having a compressing surface for compressing ground beans accommodated in a porter filter; a cylindrical main body part, which accommodates at least a portion of the compressing part and has a bottom part formed inside so as to support an upper side of the compressing surface; an operation part of which at least a portion is accommodated inside the main body part so as to move in a vertical direction with respect to the main body part; and a button part, which is disposed on an upper side of the operation part and receives compressing operation from a user so as to transmit an external force to the compressing part; wherein the operation part may have a plurality of insertion protrusions for evenly mixing the ground beans, the compressing surface may have a plurality of through holes corresponding to the plurality of insertion protrusions, and if at least a portion of the operation part is downwardly pressed in a first state in which the plurality of insertion protrusions are accommodated inside the main body part, the first state may be changed into a second state in which the plurality of insertion protrusions are exposed to outside of the main body part through the through holes.

In addition, the plurality of through holes may have different separation distances from a center point of the compressing surface, respectively.

In addition, the operation part may include a rim part, which is exposed to the outside of the main body part and to which downward pressure is applied.

In addition, the operation part may further include a support surface, which is formed to be spaced apart from an inner circumference of the rim part and on which upper side the button part is disposed.

In addition, the operation part may further include at least one connection part for connecting the rim part and the support surface, and the main body part may have at least one vertical slit formed in one area thereof so that the connection part may be inserted into the vertical slit so as to move in vertical direction.

In addition, the operation part may further include a guide part for adjusting an exposure length of the plurality of insertion protrusions through a rotational operation.

In addition, when the downward pressure is applied to the operation part, an exposure length of the plurality of insertion protrusions may be limited as the guide part comes into contact with the bottom part while the operation part descends.

In addition, in the first state, the button part and the operation part may be detachably coupled, the button part may be coupled so as to move up and down simultaneously with the compressing part, and when a predetermined external force is applied to the button part in the first state, as the button part, the operation part, and the compressing part descend, the compressing surface may compress the ground beans.

In addition, a limit rod may be formed on an upper side of the bottom part so as to adjust a descending length of the button part, and an elastic part may be further provided and disposed so as to surround an outer circumferential surface of the limit rod and apply elastic force toward the operation part.

In addition, the compressing part may include a coupling rod, which protrudes toward the button part so as to receive the external force from the button part, the button part may include a coupling hole into which the coupling rod is inserted, and as the coupling rod and the coupling hole are mutually coupled, the compressing part and the button part may be coupled.

In addition, the operation part may include a metal plate disposed at a lower side of the button part, the button part includes a magnetic part coupled to the metal plate of the operation part, and in the first state, the button part and the operation part are in close contact with each other by an attractive force between the metal plate and the magnetic part, and then when the downward pressure is applied to the operation part, the operation part is separated from the button part so that the first state is changed into the second state.

### Advantageous Effects

According to the present invention, it is possible to perform both an operation of uniformly distributing ground beans accommodated in a porter filter and an operation of applying pressure to the ground beans, so that it is convenient to use and extracts espresso more efficiently.

In addition, as the plurality of insertion protrusions exposed to the outside by the downward pressure with respect to the operation part evenly mixes the ground beans, the air layer between the ground beans can be discharged and the density of the ground beans can be prevented from being biased to a specific position, thereby providing a uniform density throughout the ground beans.

In addition, according to the present invention, the compressing surface of the compressing part that is lowered as an external force is applied to the button part presses the uniformly mixed ground beans, so that the ground beans can be flatly compressed inside the porter filter.

In addition, according to the present invention, since the ground beans in the porter filter have a uniform density, it is possible to extract high-quality espresso with uniform taste and aroma.

### DESCRIPTION OF DRAWINGS

In order to more fully understand the drawings cited in the detailed description of the present invention, a brief description of each drawing is provided.
Fig. 1 is a perspective view of a coffee tamper according to an embodiment of the present invention.
Fig. 2 is an exploded perspective view of the coffee tamper according to the embodiment of the present invention.
Fig. 3 is a cross-sectional view of the coffee tamper according to the embodiment of the present invention.
Fig. 4 is a plan view of a compressing part according to an embodiment of the present invention.
Fig. 5 is a perspective view of an operation part according to an embodiment of the present invention, and
Fig. 6 to Fig. 8 are views for illustratively explaining a method of operating a coffee tamper according to embodiments of the present invention.

### BEST MODE OF THE INVENTION

Hereinafter, exemplary embodiments according to the present invention will be described in detail with reference to the contents disclosed in the accompanying drawings. In addition, a method of configuring and using a device according to embodiments of the present invention will be described in detail with reference to the contents disclosed in the accompanying drawings. Like reference numerals or symbols in each drawing indicate parts or components that perform substantially the same function. For convenience, directions of up, down, left, and right described below are based on the drawings, and the scope of the present invention is not necessarily limited to the corresponding directions.

Terms including ordinal numbers, such as "first" and "second", may be used to describe various elements, but elements are not limited by the terms. Terms are used only to distinguish one component from another. For example, a first element may be termed a second element, and similarly, a second element may be termed a first element, without departing from the scope of the present invention. The terms "and/or" includes a combination of a plurality of related items or any one of a plurality of related items.

Terms used in this specification are used to describe embodiments, and are not intended to limit and/or restrain the present invention. Singular expressions include plural expressions unless the context clearly dictates otherwise. In this specification, it should be understood that the terms such as "include" or "have" are intended to designate that there is a feature, number, step, operation, component, part, or combination thereof described in the specification but do not preclude the presence or addition of one or more other features, numbers, or steps, operations, components, parts, or combinations thereof.

Throughout the specification, when a part is said to be connected to another part, this includes not only the case where it is directly connected but also the case where it is indirectly connected through another component in the middle. In addition, when a part includes a certain component, this means that it may further include other components but not excluding other components unless otherwise specified.

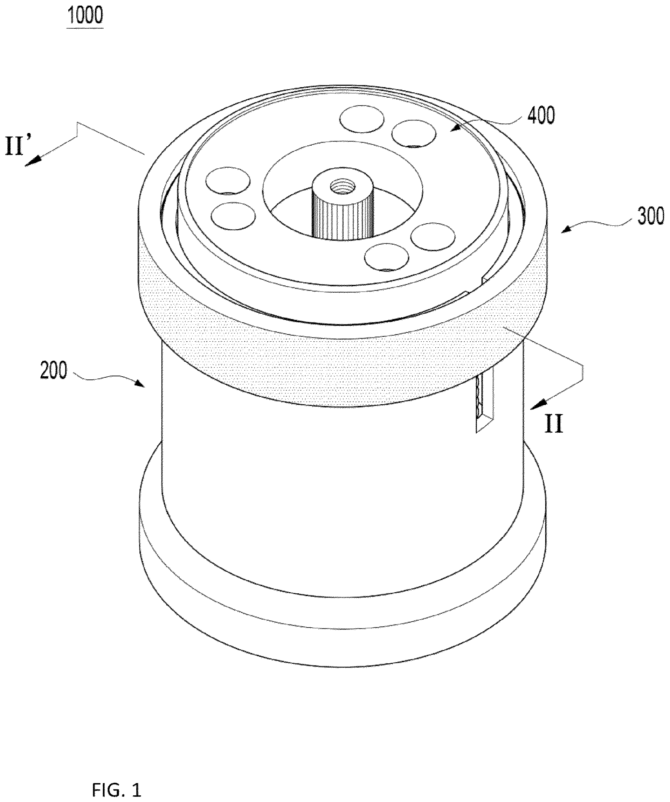

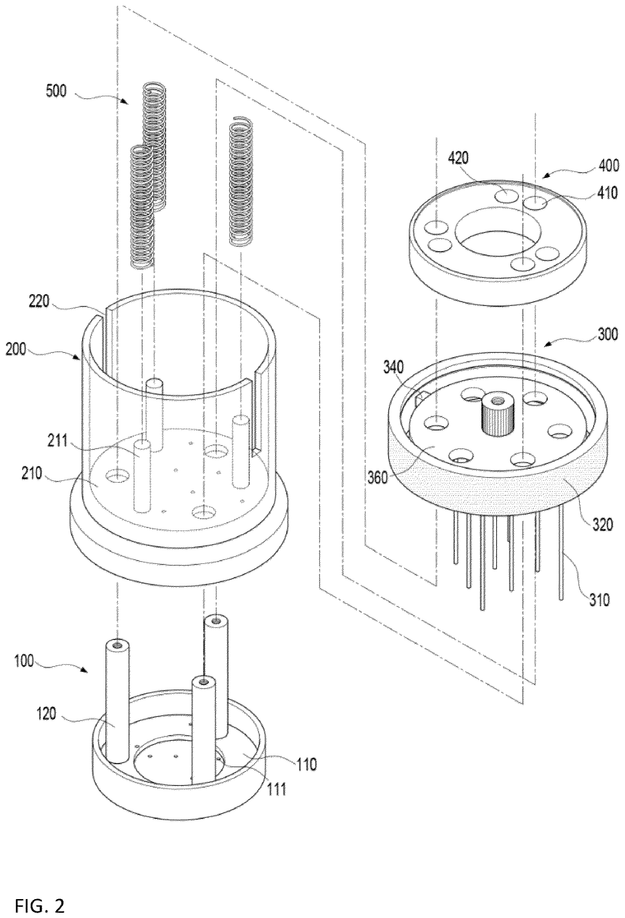

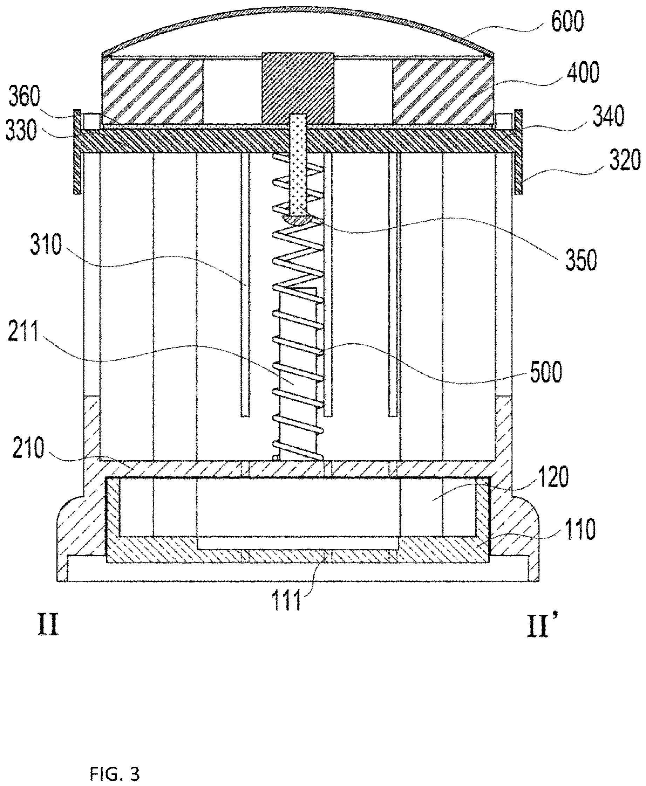

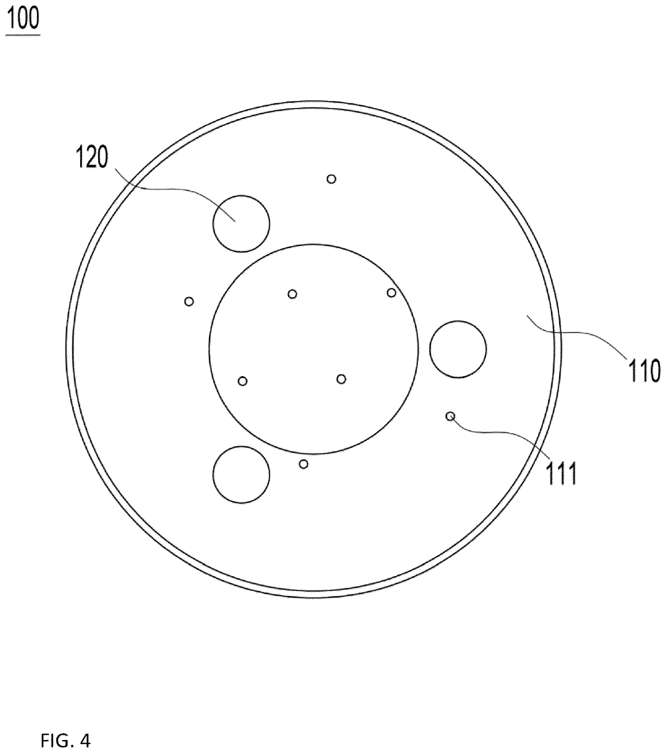

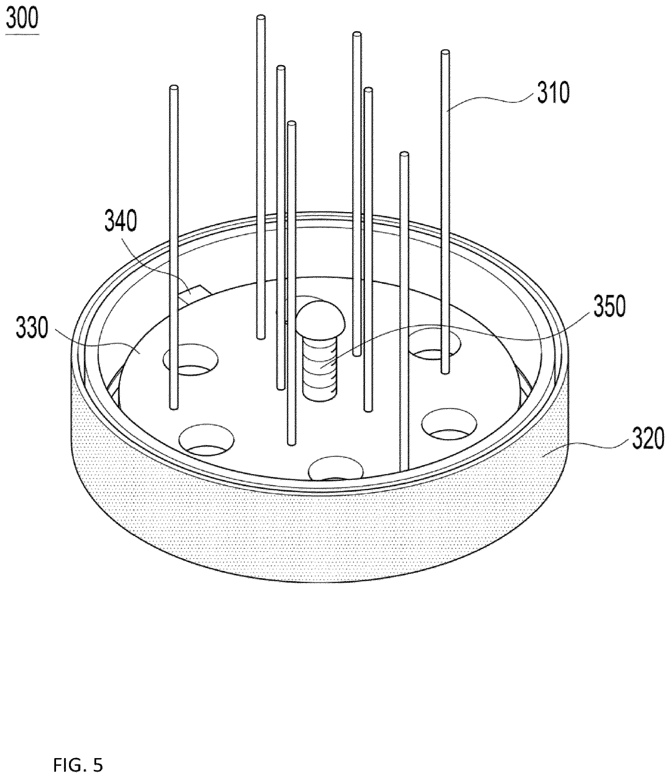

Fig. 1 is a perspective view of a coffee tamper according to an embodiment of the present invention, Fig. 2 is an exploded perspective view of the coffee tamper according to the embodiment of the present invention, Fig. 3 is a cross-sectional view of the coffee tamper according to the embodiment of the present invention, Fig. 4 is a plan view of a compressing part according to an embodiment of the present invention, and Fig. 5 is a perspective view of an operation part according to an embodiment of the present invention.

Referring to Fig. 1 to Fig. 5, a coffee tamper 1000 may include a compressing part 100, a main body part 200, an operation part 300 and a button part 400.

The compressing part 100 may compress ground beans accommodated in a porter filter. For example, when a predetermined external force is applied to the button part 400, the compressing part 100 descends together with the button part 400, and thus at least a portion of the compressing part 100, in particular, a compressing surface 110 may press the ground beans. Additionally, when an external force is applied to the button part 400, at least a portion of the compressing part 100, in particular, a compressing surface 110 protrudes downward from the main body part 200 so as to press the ground beans.

In an embodiment, the compressing surface 110 may have the compressing part 100 formed at a lower side thereof. The compressing surface 110 may flatten an upper surface of the ground beans by uniformly transferring a pressing force to the ground beans accommodated in the porter filter. To this end, for example, the compressing surface 110 may have a flat bottom surface.

In an embodiment, a plurality of through holes 111 may be formed in the compressing surface 110. At least a portion of the operation part 300, in particular, the plurality of insertion protrusions 310 may be inserted into the plurality of through holes 111 so as to be exposed to the outside of the main body part 200. To this end, for example, the plurality of through holes 111 may be formed to correspond to the plurality of insertion protrusions 310, but is not limited thereto.

In an embodiment, each of the plurality of through holes 111 may be formed at a predetermined distance from a center point of the compressing surface 110. For example, each of the plurality of through holes 111 may have a different separation distance from the center point of the compressing surface 110. In this case, in a state in which the plurality of insertion protrusions 310 are exposed through the plurality of through hole 111, the plurality of insertion protrusions 310 may have different separation distances from the center point of the compressing surface 110.

In an embodiment, a coupling rod 120 may be formed on an upper side of the compressing part 100. When a user's external force is applied to the button part 400, the coupling rod 120 may receive the external force from the button part 400 and transmit it to the compressing surface 110. To this end, for example, the coupling rod 120 may be formed to protrude a predetermined length toward the button part 400 on an upper surface of the compressing surface 110.

In an embodiment, the coupling rod 120 may combine the compressing part 100 and the button part 400 so as to allow the compressing part 100 and the button part 400 to move up and down simultaneously. For example, as the coupling rod 120 is inserted into at least a portion of the button part 400, particularly, the coupling hole 410 so as to be coupled to each other, the compressing part 100 and the button part 400 may be coupled.

Additionally/alternatively, a thread may be formed on an inner circumferential surface of an upper side of the coupling rod 120 so that at least a portion of the button part 400 can be screwed particularly through the coupling hole 410. However, this coupling structure is illustrative, and various coupling methods such as insertion coupling, holding coupling, fitting coupling, and interlocking coupling can be applied in addition to screw coupling, such that the compressing part 100 and the button part 400 can move up and down simultaneously.

The main body part 200 may accommodate at least a portion of the compressing part 100 and/or other components, for example, the operation part 300 therein. For example, the main body part 200 may have an open top surface and be implemented in a cylindrical shape so as to form an accommodation space capable of accommodating the compressing part 100 inside.

In an embodiment, a bottom part 210 may be formed inside the main body part 200 so as to support the upper side of the compressing surface 110. For example, an insertion groove (not shown) corresponding to the coupling rod 120 may be formed through the bottom part 210 so that the coupling rod 120 is inserted. In this case, the bottom part 210 protrudes inward from an inner surface of the main body part 200 so that the compressing surface 110 may be disposed on a lower side of the bottom part 210 and the coupling rod 120 may pass through the insertion groove so as to be disposed on an upper side of the bottom part 210.

In an embodiment, a limit rod 211 may be formed on the upper side of the bottom part 210. The limit rod 211 can adjust a descending length of the button part 400. Specifically, when a user's external force is applied to the button part 400, movement of the button part 400 may be limited as it descends and comes into contact with an upper end of the limit rod 211. To this end, for example, the limit rod 211 may be formed on an upper surface of the bottom part 210 so as to protrude a predetermined length toward the button part 400. However, formation position and/or shape of the limit rod 211 is not limited thereto, and the limit rod 211 may be formed in various ways such as being formed on a side surface of the main body part 200.

In an embodiment, a ring part (not shown) may be formed along an outer circumferential surface of the bottom part 210 so as to be seated on an upper surface of the porter filter. Accordingly, the main body part 200 can be stably seated in close contact with the upper surface of the porter filter and completely seal an inner space of the porter filter. To this end, for example, the ring part protrudes outward from the outer circumferential surface of the bottom part 210 at a lower end of the bottom part 210 so that at least a portion may extend downward. Additionally/alternatively, the end portion of the ring part may have a shape corresponding to that of an outer circumferential surface of the porter filter at an upper end of the porter filter. Additionally/alternatively, the ring part may have an inner diameter larger than a diameter of the upper surface of the porter filter.

In an embodiment, a vertical slit 220 may be formed in one region of the main body part 200. At least a portion of the operation part 300, in particular, a connection part 340 may be inserted into the vertical slit 220 so as to move in the vertical direction. For example, the vertical slit 220 may be formed through the side surface of the main body part 200 to a predetermined length in the vertical direction. Accordingly, when the operation part 300 descends alone to expose the plurality of insertion protrusions 310 to the outside, the movement of the operation part 300 may be guided by the vertical slit 220.

At least a portion of the operation part 300 may be accommodated inside the main body part 200 so as to be move up and down with respect to the main body part 200. In an embodiment, the operation part 300 may include a plurality of insertion protrusions 310, a rim part 320, a support surface 330, a connection part 340, a guide part 350 and/or a metal plate 360.

The plurality of insertion protrusions 310 may be inserted into the ground beans accommodated in a porter filter so as to evenly mix the ground beans. Accordingly, an air layer between the ground beans can be discharged, and finally, density of the ground beans is prevented from being biased at a specific position, and the ground beans can have a uniform density as a whole. In addition, it is possible to perform both the operation of uniformly distributing the ground beans accommodated in the porter filter through the operation part 300 and the operation of applying pressure to the ground beans through the compressing part 100, thereby ensuring convenient use and extracting espresso more efficiently.

In an embodiment, if at least a portion of the operation part 300, in particular, the rim part 320 is pressed downward in a first state in which the plurality of insertion protrusions 310 are accommodated inside the main body part 200, the first state may be changed into a second state in which the plurality of insertion protrusions 310 are exposed to the outside of the main body part 200 through the through holes 111 of the compressing surface 110. In the second state, as the coffee tamper 1000 is gripped and rotated with respect to the porter filter, the plurality of insertion protrusions 310 can evenly mix the ground beans.

In an embodiment, the plurality of insertion protrusions 310 may have different separation distances from the center point of the compressing surface 110 in the second state. In this case, air layer discharge between the ground beans, uniform density control of the ground beans, or the like may be performed more efficiently through the plurality of insertion protrusions 310.

When changing the first state into the second state, downward pressure may be applied to the rim part 320. For example, as the rim part 320 is exposed to the outside of the main body part 200, a user may hold the rim part 320 and then apply downward pressure and/or upward pressure to the rim part 320.

The support surface 330 may fix and support the plurality of insertion protrusions 310 together with the metal plate 360. For example, the support surface 330 may have fitting grooves (not shown) formed through the support surface 330 so as to correspond to the plurality of insertion protrusions 310, so that the plurality of insertion protrusions 310 are inserted into the fitting grooves. In this case, upper side regions of the plurality of insertion protrusions 310 are formed to be curved in predetermined directions and are seated on an upper side of the support surface 330, and lower side regions of the plurality of insertion protrusions 310 may be disposed at a lower side of the support surface 330 by passing through the fitting grooves.

In addition, the button part 400 may be disposed on the upper side of the support surface 330. In this case, as a predetermined external force is applied to the button part 400, the operation part 300 may descend together with the button part 400. For example, the support surface 330 may protrude inward at a predetermined distance from an inner circumference of the rim part 320.

The connection part 340 can connect the rim part 320 and the support surface 330. For example, when downward pressure is applied to the rim part 320 in the first state, the operation part 300 descends alone and enters the second state, wherein the descent of the operation part 300 can be guided as the connection part 340 is inserted into the vertical slit 220 and moves.

In an embodiment, the connection part 340 may have an opening portion (not shown) formed between one end portion and the other end portion of the connection part 340. The opening portion is penetratingly formed into a shape corresponding to that of an upper edge of the main body part 200, so that when the first state is changed into the second state, the side surface of the main body part 200 may be inserted into the opening portion.

The guide part 350 may limit an exposure length of the plurality of insertion protrusions 310. Specifically, when downward pressure is applied to the operation part 300, the operation part 300 descends, and then as the guide part 350 comes into contact with the bottom part 210, the movement of the operation part 300 and the exposure length of the plurality of insertion protrusions 310 may be limited. To this end, for example, the guide part 350 may protrude a predetermined length toward the lower side of the support surface 330.

In addition, the guide part 350 may adjust the exposure length of the plurality of insertion protrusions 310 through a rotational operation. For example, when the guide part 350 is rotated, a protruding length toward the lower side of the support surface 330 is adjusted, and the exposure length of the plurality of insertion protrusions 310 may be determined according to the protruding length of the guide part 350.

In an embodiment, the support surface 330 may have a cut part (not shown) into which the guide part 350 is inserted. For example, the guide part 350 can be inserted into the cut part so as to be fastened to each other, thereby being coupled to the support surface 330, wherein the protruding length of the guide part 350 can be determined by adjusting a coupling length of the guide part 350 that is inserted into the cut part.

Additionally/alternatively, the guide part 350 and the cut part may be screw-coupled together. In this case, at least one screw thread corresponding to each other may be formed on an outer circumferential surface of the guide part 350 and/or an inner circumferential surface of the cut part. However, this coupling structure is exemplary, and various coupling methods such as insertion coupling, holding coupling, fitting coupling, engagement coupling or the like may be applied in addition to screw coupling.

The metal plate 360 may detachably couple the operation part 300 and the button part 400 in the first state. In an embodiment, the metal plate 360 is disposed on a lower side of the button part 400, so that the operation part 300 can be brought into close contact with the button part 400 through attraction between the metal plate 360 and at least a portion of the button part 400, in particular, the magnetic part 420.

In an embodiment, when downward pressure is applied to the operation part 300 in the first state so that an external force of a predetermined intensity or more is applied, the operation part 300 can be separated from the button part 400. Accordingly, only the operation part 300 may descend alone and enter the second state in which the plurality of insertion protrusions 310 are exposed to the outside.

Additionally/alternatively, when upward pressure is applied to the operation part 300 in the second state so that the operation part 300 reaches a predetermined height, an attractive force is generated between the metal plate 360 and at least a portion of the button part 400, particularly, the magnetic part 420, thereby assisting the movement of the operation part 300. The operation part 300 may be coupled to the button part 400 by the attraction force between the metal plate 360 and the magnetic part 420, and enters the first state in which the plurality of insertion protrusions 310 are accommodated inside the main body part 200.

In an embodiment, the metal plate 360 may be disposed between the button part 400 and the support surface 330 so as to fix and support the plurality of insertion protrusions 310 together with the support surface 330. For example, the upper side regions of the plurality of insertion protrusions 310 which are curved may be seated on the upper side of the support surface 330 and pressed by the metal plate 360.

The button part 400 may be disposed on an upper side of the operation part 300 so as to receive compressing operation from a user. For example, the button part 400 may be coupled to the upper side of the compressing part 100 and thus transfer an external force applied by a user to the compressing part 100.

In an embodiment, the button part 400 may be coupled to the compressing part 100 so as to simultaneously move up and down with the compressing part 100. To this end, the button part 400 may have a coupling hole 410 into which the coupling rod 120 of the compressing part 100 is inserted. For example, the coupling hole 410 is formed through the inside of the button part 400 in a shape corresponding to an outer circumferential surface of the coupling rod 120, so that as the coupling rod 120 is inserted into the coupling hole 410 and mutually fastened, the compressing part 100 and the button part 400 may be coupled.

In an embodiment, the button part 400 may be detachably coupled to the operation part 300. To this end, the button part 400 may have a magnetic part 420 coupled to the metal plate 360. The magnetic part 420 may come into close contact with the operation part 300 in the first state in which the plurality of insertion protrusions 310 are accommodated inside the main body part 200 by the attraction force with respect to the metal plate 360. The magnetic part 420 may be provided on one side disposed in an operation part 300 direction, for example, on one side of the bottom of the button part 400, but the arrangement of the magnetic part 420 is not limited thereto.

In an embodiment, when a predetermined external force is applied to the button part 400 in the first state, as the button part 400, the operation part 300 and the compressing part 100 descend, the compressing surface 110 may press ground beans accommodated in the porter filter. Then, when the external force is removed, the elastic part 500 applies an elastic force to the operation part 300, and the operation part 300 and the button part 400 can move up together due to the attraction force between the metal plate 360 and the magnetic part 420.

In an embodiment, while the button part 400 and the operation part 300 are in close contact with each other in the first state, if downward pressure is applied to the operation part 300, the operation part 300 is separated from the button part 400 and descends alone, thereby entering the second state in which the plurality of insertion protrusions 310 are exposed.

Additionally/alternatively, when upward pressure is applied to the operation part 300 in the second state so that the operation part 300 reaches a predetermined height, an attractive force is generated between the metal plate 360 and the magnetic part 420 and thus can assist the movement of the operation part 300. The operation part 300 is coupled to the button part 400 by the attraction force between the metal plate 360 and magnetic part 420, thereby entering the first state in which the plurality of insertion protrusions 310 are accommodated inside the main body part 200.

Depending on embodiments, an elastic part 500 may be further provided so as to apply an elastic force toward the operation part 300. The elastic part 500 may restore positions of the compressing part 100, the operation part 300 and the button part 400, which are lowered, as a predetermined force is applied to the button part 400 in the first state. For example, the elastic part 500 is disposed between the bottom part 210 and the operation part 300, and, specifically, may be disposed to surround an outer circumferential surface of the limit rod 211.

Depending on embodiments, a cap part 600 may be further provided so as to be disposed on an upper side of the button part 400. The cap part 600 shields an upper portion of the button part 400 and can be applied with a pressing force by a user. For example, if a user presses the cap part 600 in the first state, the cap part 600, the button part 400, the operation part 300 and the compressing part 100 can be lowered together. Accordingly, a pressing force can be delivered more uniformly to the button part 400, the elastic part 500 and/or the ground beans accommodated in the porter filter.

The coffee tamper 1000 according to Fig. 1 to Fig. 5 is exemplary, and various configurations may be applied thereto according to embodiments to which the present invention is applied.

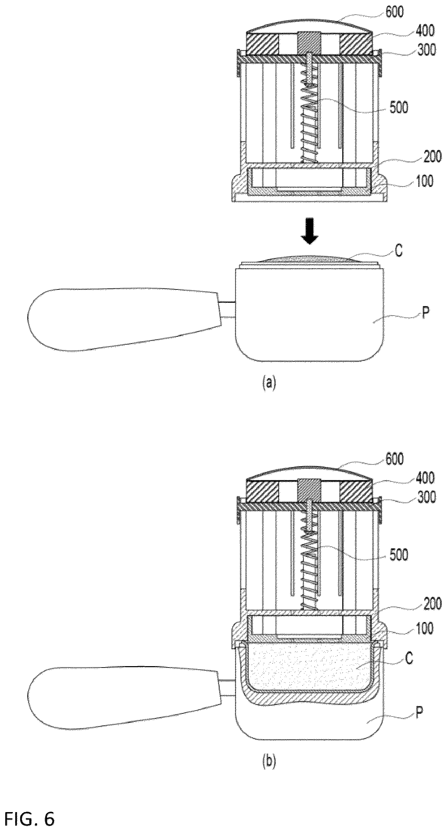

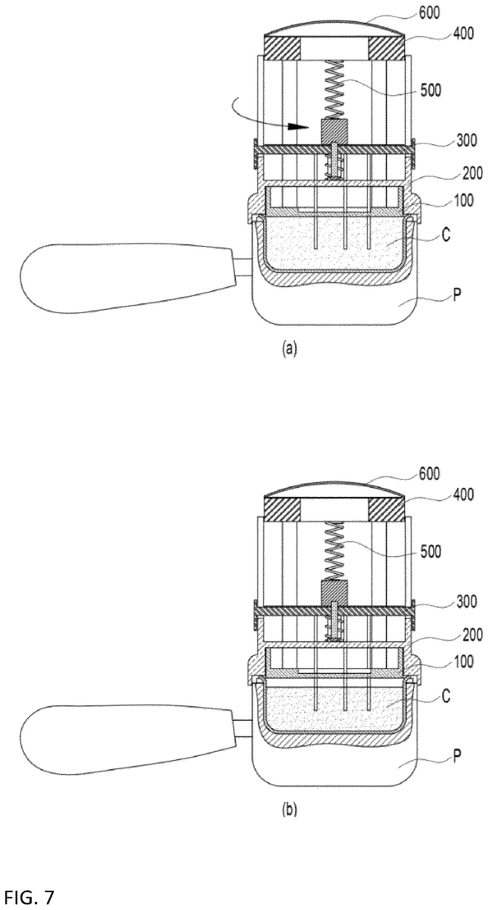

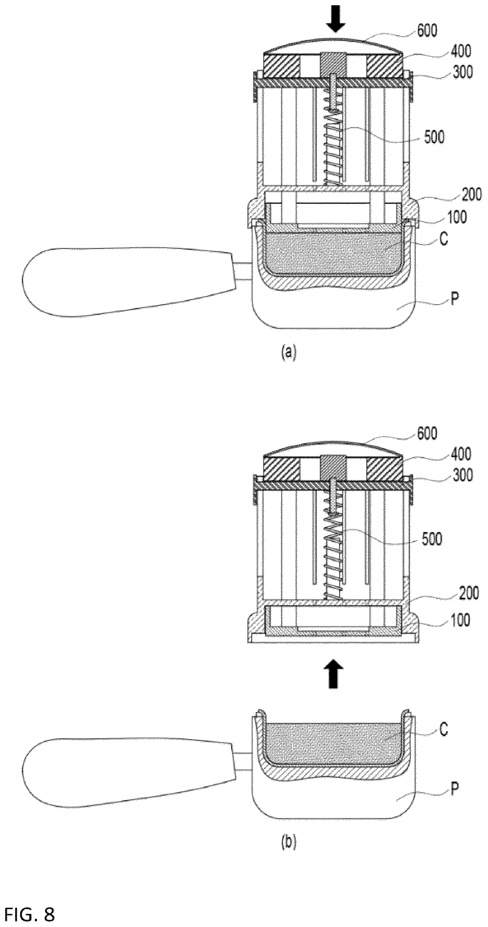

Fig. 6 to Fig. 8 are views for illustratively explaining a method of operating a coffee tamper according to embodiments of the present invention. Specifically, Fig. 6 shows a process in which the coffee tamper 1000 is seated on an upper side of a porter filter P, Fig. 7 shows a process in which ground beans C are evenly mixed by the coffee tamper 1000, and Fig. 8 shows a process in which the ground beans C are compressed by the coffee tamper 1000.

Referring to Fig. 6, the coffee tamper 1000 can be seated on the upper side of the porter filter P in which the ground beans C are accommodated. Herein, the main body part 200 is stably secured on an upper surface of the porter filter in close contact with the upper surface, thereby completely sealing an inner space of the porter filter P.

Referring to Fig. 7a, as the rim part 320 is pressed downward in the first state in which the plurality of insertion protrusions 310 are accommodated inside the main body part 200, the operation part 300 can be separated from the button part 400 and descend alone. If the guide part 350 comes into contact with the bottom part 210 while the operation part 300 descends, the movement of the operation part 300 may be restricted. The plurality of insertion protrusions 310 are exposed to the outside through the through holes 111 of the compressing surface 110 and the first state may be changed into the second state.

Referring to Fig. 7b, if the coffee tamper 1000 is gripped and rotated with respect to the porter filter P in the second state, the plurality of insertion protrusions 310 may evenly mix the ground beans C. Accordingly, the air layer between the ground beans C is discharged, and the density of the ground beans C is not biased at a specific position, so that the ground beans C can have a uniform density as a whole. Herein, in the second state, the plurality of insertion protrusions 310 may have different separation distances from the center point of the compressing surface 110.

Referring to Fig. 8a, a user may press the button part 400 by applying a predetermined external force to the cap part 600 in the first state. Herein, by the attraction force between the metal plate 360 and the magnetic part 420, the operation part 300 descends together with the button part 400, In addition, the compressing part 100 can also descend together with the button part 400 by mutual fastening between the coupling rod 120 and the coupling hole 410. Accordingly, the compressing surface 110 can compress the ground beans C accommodated in the porter filter, and the ground beans C can be flatly compressed inside the porter filter P.

Referring to Fig. 8b, if the external force is removed after tamping operation, the elastic part 500 may apply an elastic force to the operation part 300. In addition, due to the attraction force between the metal plate 360 and the magnetic part 420, the operation part 300 and the button part 400 may move up together. Furthermore, the compressing part 100 may also move up together with the button part 400 by the mutual fastening between the coupling rod 120 and the coupling hole 410.

The operations of the coffee tamper 1000 according to Fig. 6 to Fig. 8 are exemplary, and various movement methods may be applied thereto according to embodiments to which the present invention is applied.

As described above, the optimum embodiments have been disclosed in the drawings and description. Although specific terms have been used herein, they are only used for the purpose of describing the present invention and are not used to define the meaning or limit the scope of the present invention described in the claims. Therefore, those skilled in the art will understand that various modifications and equivalent other embodiments are possible therefrom. Therefore, the true technical protection scope of the present invention should be determined by the technical spirit of the appended claims.

### Explanation of Reference Numerals

| | | | |
|---|---|---|---|
| 100: | compressing part | 110: | compressing surface |
| 111: | through hole | 120: | coupling rod |
| 200: | main body part | 210: | bottom part |
| 211: | limit rod | 220: | vertical slit |
| 300: | operation part | 310: | insertion protrusions |
| 320: | rim part | 330: | support surface |
| 340: | connection part | 350: | guide part |
| 360: | metal plate | 400: | button part |
| 410: | coupling hole | 420: | magnetic part |
| 500: | elastic part | 600: | cap part |
| 1000: | coffee tamper | | |

## Claims

1. A coffee tamper, comprising:
a compressing part having a compressing surface for compressing ground beans accommodated in a porter filter;
a cylindrical main body part, which accommodates at least a portion of the compressing part and has a bottom part formed inside so as to support an upper side of the compressing surface;
an operation part of which at least a portion is accommodated inside the main body part so as to move in a vertical direction with respect to the main body part; and
a button part, which is disposed on an upper side of the operation part and receives compressing operation from a user so as to transmit an external force to the compressing part;
wherein the operation part has a plurality of insertion protrusions for evenly mixing the ground beans, and the compressing surface has a plurality of through holes corresponding to the plurality of insertion protrusions, and
if at least a portion of the operation part is downwardly pressed in a first state in which the plurality of insertion protrusions are accommodated inside the main body part, the first state is changed into a second state in which the plurality of insertion protrusions are exposed to outside of the main body part through the through holes.

2. The coffee tamper according to claim 1, wherein the plurality of through holes have different separation distances from a center point of the compressing surface, respectively.

3. The coffee tamper according to claim 1, wherein the operation part includes a rim part, which is exposed to the outside of the main body part and to which downward pressure is applied.

4. The coffee tamper according to claim 3, wherein the operation part further includes a support surface, which is formed to be spaced apart from an inner circumference of the rim part and on which upper side the button part is disposed.

5. The coffee tamper according to claim 4, wherein
the operation part further includes at least one connection part for connecting the rim part and the support surface, and
the main body part has at least one vertical slit formed in one area thereof so that the connection part is inserted into the vertical slit so as to move in vertical direction.

6. The coffee tamper according to claim 4, wherein
the operation part further includes a guide part for adjusting an exposure length of the plurality of insertion protrusions through a rotational operation, and
when the downward pressure is applied to the operation part, an exposure length of the plurality of insertion protrusions is limited as the guide part comes into contact with the bottom part while the operation part descends.

7. The coffee tamper according to claim 1, wherein
in the first state, the button part and the operation part are detachably coupled,
the button part is coupled so as to move up and down simultaneously with the compressing part, and
when a predetermined external force is applied to the button part in the first state, as the button part, the operation part, and the compressing part descend, the compressing surface compresses the ground beans.

8. The coffee tamper according to claim 7, wherein
a limit rod is formed on an upper side of the bottom part so as to adjust a descending length of the button part, and
an elastic part is further provided and disposed so as to surround an outer circumferential surface of the limit rod and apply elastic force toward the operation part.

9. The coffee tamper according to claim 7, wherein
the compressing part includes a coupling rod, which protrudes toward the button part so as to receive the external force from the button part,
the button part includes a coupling hole into which the coupling rod is inserted, and
as the coupling rod and the coupling hole are mutually coupled, the compressing part and the button part are coupled.

10. The coffee tamper according to claim 1, wherein
the operation part includes a metal plate disposed at a lower side of the button part,
the button part includes a magnetic part coupled to the metal plate of the operation part, and
in the first state, the button part and the operation part are in close contact with each other by an attractive force between the metal plate and the magnetic part, and then when the downward pressure is applied to the operation part, the operation part is separated from the button part so that the first state is changed into the second state.
